# EUROPÄISCHE PATENTSCHRIFT

(11) **EP 4 551 923 B1**
(45) Veröffentlichungstag und Bekanntmachung des Hinweises auf die Patenterteilung: **06.05.2026**
(21) Anmeldenummer: 23734272.0
(22) Anmeldetag: 22.06.2023
(51) Int. Cl.: G01N 21/27, G01N 21/359, G01N 21/84

(54) **VERFAHREN ZUR BESTIMMUNG DER MENGE UND/ODER DER ZUSAMMENSETZUNG VON EINER AUF EIN TRÄGERMATERIAL AUFGETRAGENEN PULVERFÖRMIGEN HARZSCHICHT**
METHOD FOR DETERMINING THE VOLUME AND / OR THE COMPOSITION OF A POWDERED RESIN LAYER APPLIED TO A CARRIER MATERIAL
PROCÉDÉ DE DÉTERMINATION DE LA QUANTITÉ ET/OU DE LA COMPOSITION D'UNE COUCHE DE RÉSINE EN FORME DE POUDRE APPLIQUÉE SUR UNE MATIÈRE SUPPORT

(30) Priorität: 04.07.2022 EP 22182895
(43) Veröffentlichungstag der Anmeldung: 14.05.2025
(73) Patentinhaber: Flooring Technologies Ltd., Kalkara SCM1001 (MT)
(72) Erfinder: KALWA, Norbert, 32805 Horn-Bad Meinberg (DE); ZHANG, Jinming, 10247 Berlin (DE)
(74) Vertreter: Maikowski & Ninnemann Patentanwälte Partnerschaft mbB
(86) Internationale Anmeldenummer: PCT/EP2023/066997
(87) Internationale Veröffentlichungsnummer: WO 2024/008469

(56) Entgegenhaltungen:
- US-A1- 2004 195 714
- US-A1- 2007 039 678
- US-A1- 2007 131 862

## Beschreibung

Die vorliegende Erfindung betrifft ein Verfahren zur Steuerung einer Produktionslinie zur Herstellung eines beschichteten Trägermaterials, wobei mindestens eine Schicht aus mindestens einem pulverförmigen Harz oder Harzmischung auf das mindestens ein Trägermaterial aufgetragen wird.

### Beschreibung

Die Verwendung von Holzwerkstoffplatten in der Möbelindustrie, als Fußbodenbeläge oder auch zum Verkleiden von Wänden und Decken erfordert eine Bearbeitung bzw. Veredelung der Oberfläche der Holzwerkstoffplatten. Üblicherweise werden im Falle der genannten Anwendungsgebiete die Holzwerkstoffplatten mit einem imprägnierten Dekorpapier beschichtet. Der Vielfältigkeit an verschieden gemusterten Dekorpapieren sind keine Grenzen gesetzt, so dass Holzwerkstoffplatten mit einer Vielzahl von unterschiedlichen Dekoren wie z.B. Stein- oder Holzdekoren erhältlich sind. Zur Erhöhung der Verschleißfestigkeit werden auf das Dekorpapier Overlays aufgebracht. Als Overlay werden dünne Papiere verwendet, welche typischerweise bereits mit einem Melaminharz getränkt wurden Es sind ebenfalls Overlays erhältlich, in denen bereits abriebfeste Partikel, wie zum Beispiel Korundpartikel in das Harz des Overlays eingemischt sind, um die Abriebfestigkeit des Laminats bzw. der Holzwerkstoffplatte zu erhöhen.

Als Alternative zur Verwendung von Dekorpapieren auf Holzwerkstoffplatten hat sich in der Vergangenheit das direkte Bedrucken von Holzwerkstoffplatten entwickelt, da ein Bedrucken von Papier und dessen nachträglichem Kaschieren oder Direktbeschichten auf die Holzwerkstoffplatte entfällt. Auf das im Direktdruck aufgebrachte Dekor werden anschließend mehrere flüssige wärmehärtbare Harzschichten aufgetragen, die zur Erhöhung der Verschleißfestigkeit abriebfeste Partikel enthalten können. Eine solche wärmehärtbare Harzschicht wird auch als Flüssigoverlay bezeichnet.

Die in diesen Anwendungen verwendeten Harze oder Leime werden meist als flüssige, häufig wässrige Formulierungen zur Imprägnierung von Papierlagen oder Beschichtung von Trägerplatten eingesetzt. Diese werden über einen Tränkprozess in einem Imprägnierkanal auf Papiere oder durch einen Walzenauftrag auf plattenförmige Trägermaterialien aufgebracht. Anschliessend wurde dann das Lösemittel durch erwärmte Luft oder durch Strahlung verdunstet. Dies ist ein relativ energieintensiver Prozess und führt zusätzlich zu Emissionen, die über thermische Nachverbrennung oder durch ein Abluftreinigungssystem eliminiert werden müssen. Zudem ist dieser Prozess auch unter ökologischen Aspekten als kritisch einzuschätzen.

Die Auftragsmengen auf Papiere oder Trägermaterialien werden dabei durch Walzenspalte, Rakel usw. eingestellt und danach meist durch Auswiegen kontrolliert. Auch bei der Verwendung von Harzgemischen wurde auf die beschriebene Technologie zurückgegriffen.

Eine Alternative zu flüssigen Harzen oder Leimen ist die Verwendung von Pulverharzen. Diese können über Streuverrichtungen oder durch Sprühdüsen auf Papiere oder Trägerplatten aufgebracht werden. Da diese Aufträge kontaktlos erfolgen, sind die Aufträge pro Flächeneinheit allenfalls durch den Mengenverbrauch pro Zeiteinheit bestimmbar. Allerdings sind bei pulverförmigen Aufträgen Inhomogenitäten durch Turbulenzen oder durch statische Einflüsse möglich. Dies kann besonders in den Anlagenrändern/-begrenzungen problematisch sein. Auch die Bestimmung der Auftragsmengen auf Papiere oder Trägermaterialien kann häufig erst am Ende der Produktionslinie nach der Fixierung des Pulvers durch Verpressen oder Einbrennen erfolgen. Andernfalls kann bei der Probenentnahme bereits ein Herabfallen des Pulvers erfolgen. Dies ist besonders kritisch, wenn mehrere Aufträge nacheinander erfolgen, da am Ende nur der Gesamtauftrag bestimmt werden kann. Bei vielen Produkten ist die Produktqualität aber entscheidend von dem exakten Auftrag der einzelnen Schichten abhängig. Auch können Kostennachteile auftreten, wenn bestimmte Funktionsschichten nicht in der gewünschten Art und Weise aufgetragen werden.

Nachteilig sind daher eine fehlende in-line Kontrolle und eine notwendige Nachjustierung, die nur mit Zeitverzug erfolgen kann. Auch sind Zusammensetzungsschwankungen des aufgetragenen Harzpulvers bzw. von Harzpulvermischungen nicht erkennbar.

Der Erfindung liegt daher die technische Aufgabe zu Grunde eine zerstörungsfreie Methode zu entwickeln, die die Auftragsmenge und die Zusammensetzung eines pulverförmigen Harz- oder Leimauftrag bestimmen kann. Die Methode soll in-line in Produktionslinien installiert sein und möglichst viele Messungen pro Zeiteinheit in Fertigungsrichtung und quer dazu liefern. Durch die Messungen soll der Produktionsprozess nicht gestört werden.

Diese Aufgabe wird durch ein Verfahren mit den Merkmalen des Anspruchs 1 gelöst.

Demnach wird ein Verfahren zur Steuerung einer Produktionslinie zum Herstellung eines beschichteten Trägermaterials bereitgestellt, wobei mindestens eine Schicht aus mindestens einem pulverförmigen Harz oder Harzmischung auf das mindestens ein Trägermaterial aufgetragen wird,
wobei die Produktionslinie mindestens umfasst
   - mindestens einen NIR-Multimesskopf zur Aufnahme von mindestens einem NIR-Spektrum des mit dem pulverförmigen Harz oder Harzmischung beschichteten Trägermaterials unter Verwendung des mindestens einen NIR-Messkopfes in einem Wellenlängenbereich zwischen 1400 nm und 1600 nm, bevorzugt zwischen 1450 nm und 1550 nm;
   - mindestens ein Steuerungssystem zur Steuerung der Produktionslinie, wobei das Steuerungssystem der Produktionslinie mindestens eine computergestützte Auswerteeinheit und eine Datenbank umfasst,
   - wobei die Auswerteeinheit konfiguriert ist, das für das mit dem pulverförmigen Harz oder Harzmischung beschichtete Trägermaterial aufgenommene NIR-Spektrum mit einem erstellten Kalibrationsmodell zu vergleichen, um die quantitativen Menge des auf das Trägermaterial aufgebrachten pulverförmigen Harzes oder Harzmischung zu bestimmen,
   - wobei die Datenbank konfiguriert ist, die so bestimmten Parameterdaten über die Auftragsmenge an pulverförmigen Harz zu speichern,
   - wobei das Steuerungssystem konfiguriert ist, die bestimmten Parameter zur Steuerung der Produktionslinie zu verwenden,
wobei das Kalibrationsmodell anhand von Referenzproben wie folgt bestimmt wird:
   - Aufbringen von mindestens einem pulverförmigen Harz oder einer pulverförmigen Mischung aus mindestens zwei Harzen in einem definierten Mischungsverhältnis in jeweils unterschiedlichen quantitativ definierten Mengen auf jeweils ein Trägermaterial als Referenzproben;
   - Aufnahme von mindestens einem NIR-Spektrum jeder der Referenzproben unter Verwendung von mindestens einem NIR-Messkopf in einem Wellenlängenbereich zwischen 700 nm und 2000 nm, bevorzugt zwischen 900 nm und 1700 nm, insbesondere bevorzugt zwischen 1400 nm und 1600 nm, und besonders vorteilhaft zwischen 1450 nm und 1550 nm;
   - Zuordnung der unterschiedlichen quantitativen Mengen an pulverförmigen Harz oder Harzmischung der Referenzproben zu den aufgenommenen NIR-Spektren der genannten Referenzproben; und
   - Erstellung eines Kalibriermodells für den Zusammenhang zwischen den spektralen Daten der NIR-Spektren und den dazugehörigen quantitativen Mengen an pulverförmigen Harz oder Harzmischung der Referenzproben mittels einer multivariaten Datenanalyse.

Die Menge und/oder der Zusammensetzung von mindestens einer auf mindestens ein Trägermaterial aufgetragenen Schicht aus mindestens einem pulverförmigen Harz oder Harzmischung wird unter Verwendung des Kalibrationsmodell mit den folgenden Schritten bestimmt:
- Aufbringen von mindestens einer Schicht aus mindestens einem pulverförmigen Harz der Harzmischung auf ein Trägermaterial,
- Aufnehmen von mindestens einem NIR-Spektrum des mit dem pulverförmigen Harz oder Harzmischung beschichteten Trägermaterials unter Verwendung des mindestens einen NIR-Messkopfes in einem Wellenlängenbereich zwischen 700 nm und 2000 nm, bevorzugt zwischen 900 nm und 1700 nm, insbesondere bevorzugt zwischen 1400 nm und 1600 nm und besonders vorteilhaft zwischen 1450 nm und 1550 nm; und
- Bestimmen der quantitativen Menge des auf das Trägermaterial aufgebrachten pulverförmigen Harzes oder Harzmischung durch Vergleich des für das beschichtete Trägermaterial aufgenommenen NIR-Spektrums mit dem erstellten Kalibriermodell.

Gemäß dem vorliegenden Verfahren wird ein NIR-Spektrum der auf ein Trägermaterial, wie einer Trägerplatte oder Papier, aufgetragenen pulverförmigen Harzmenge aufgenommen. Dies erlaubt nicht nur eine Bestimmung der Auftragsmenge sondern auch die Analyse der Zusammensetzung eines pulverförmigen Harz- bzw. Leimgemisches. Dazu wurden zunächst NIR-Spektren von verschiedenen Auftragsmengen von pulverförmigen Harzen oder Harzgemischen auf unterschiedlichen Trägermaterialen aufgenommen. Damit soll der Einfluss des Untergrundes auf das Spektrum geprüft werden. Dabei zeigte sich erstaunlicherweise, dass selbst Auftragsmengen von bis zu 600 g Harzpulver/m² bestimmt werden können. Das Gleiche wird danach mit Harzgemischen durchgeführt. Danach wurden Kalibrationsmodelle erstellt mit deren Hilfe dann auf unbekannte Mengen und Zusammensetzungen geschlossen werden kann. Ein weiterer Vorteil ist, dass aus den NIR-Spektren auch weitere Parameter (z. B.: Feuchte, siehe hierzu z.B. EP 2 915 658 B1, EP 2 808636 B1) analysiert werden können. Dies kann ebenfalls helfen Qualitätsmängel zu vermeiden.

Aus der US 2007/131862A1 ist zwar bekannt, NIR Spektroskopie zur Bestimmung der Zusammensetzung von Proben aus Mischungen aus Holzpartikeln und anderen Komponenten wie Harz, Wachs, Polyole, anorganische Härter zu bestimmen, allerdings werden hierfür die zu vermessenden Proben vor der Messung zerkleinert, zermahlen und vermischt. Ziel ist die Überwachung und Verbesserung von Verfahrensvariablen zur Herstellung von Holzwerkstoffkompositen, wie Mischungseffizienz, Rotationsgeschwindigkeit, Harztemperatur etc.

Im Gegensatz dazu wird das erfindungsgemäße Verfahren nach der Bereitstellung des fertigen Trägermaterials, insbesondere nach Bereitstellung einer verpressten Holzwerkstoffplatte (z.B. HDF Platte) im Prozess der Oberflächenveredlung der Holzwerkstoffplatte eingesetzt. Gemäß dem erfindungsgemäßen Verfahren wird die auf ein Trägermaterial (wie z.B. eine bereist verpresste Holzwerkstoffplatte) aufgestreute Menge und Zusammensetzung eines Harzpulvers bestimmt; d.h. es ist nicht notwendig die zu vermessende Probe vor dem Vermessen mittels NIR Spektroskopie zu zermahlen. Das erlaubt eine kontinuierliche Messung.

Wie noch weiter unten erläutert, kann die Bestimmung über NIR-Spektroskopie für eine Vielzahl von verschiedenen Harzen/Leimen genutzt werden. Dies können u. A. pulverförmige Melamin-Formaldehyd-Harze, Harnstoff-Formaldehyd-Harze, Phenol-Formaldehyd-Harze oder Gemische daraus sein. Weitere Harze können auf pulverförmigen Polyester-, Epoxidharz usw. basieren. Die Pulverharze können noch Hilfsstoffe wie Härter, Pigmente, Antistatika usw. enthalten. Auch der Einsatz von Mitteln zur Verbesserung der Applikationseigenschaften können verwendet worden sein.

Dieses Verfahren kann an einer Produktionslinie sowohl in Produktionsrichtung als auch quer dazu genutzt werden. Durch eine Visualisierung können Änderungen in den Auftragsmengen oder in der Verteilung zeitnah aufgezeigt werden.

Das vorliegende Verfahren ermöglicht die Bereitstellung der Messwerte in kurzer Zeit (online, bevorzugt ohne störende Zeitverzögerung) im Vergleich zu herkömmlichen (bekannten) Messverfahren. Die Messdaten können zur Qualitätssicherung, Forschung und Entwicklung, zur Prozesskontrolle, Prozessregelung, Prozesssteuerung usw. eingesetzt werden. Durch den Messvorgang wird die Produktionsgeschwindigkeit usw. nicht reduziert. Grundsätzlich wird damit die Überwachung der Produktion verbessert. Zudem werden auch Stillstandszeiten durch Qualitätsbestimmungen und Anlagenjustierungen reduziert.

Die mit dem vorliegenden Verfahren mögliche Bestimmung der Auftragsmenge an pulverförmigen Harz oder Harzgemisch erfolgt bevorzugt ausschließlich mittels NIR-Messung. Eine Kombination mit anderen spektroskopischen Methoden, insbesondere unter Verwendung von anderen Wellenlängen außerhalb des NIR-Bereiches ist nicht vorgesehen.

Es erfolgt somit der Einsatz eines NIR-Messkopfes, bevorzugt eines NIR-Multimesskopfes, der über die Aufnahme von spektralen Daten (Spektren) im nahinfraroten Bereich (700-2000 nm) eine Bestimmung der Menge an pulverförmigen Harz zulässt. Die NIR-Strahlung wechselwirkt mit den organischen Funktionsgruppen, wie zum Beispiel O-H, C-H und N-H, die z.B. sowohl in Harnstoff- als auch in Melaminharz vorhanden sind. Während der Wechselwirkung wird die NIR-Strahlung durch die gemessene Probe gestreut und reflektiert. Durch den Empfang der reflektierten NIR-Strahlung per NIR-Detektor wird ein NIR-Spektrum erzeugt. Bei dieser Messung werden in einer Sekunde eine Vielzahl von einzelnen NIR-Messungen durchgeführt, sodass auch eine statistische Absicherung der Werte gewährleistet wird. Die NIR-Spektroskopie zusammen mit der (unten angeführten) Multivariaten Datenanalyse bietet eine Möglichkeit an, einen direkten Bezug zwischen den spektralen Informationen (NIR-Spektren) und den zu bestimmenden Parametern der aufgebrachten Harzschicht herzustellen.

Das vorliegende Verfahren nutzt den Umstand aus, dass die NIR-Strahlung nicht durch das Trägermaterial hindurch dringt, sondern an der Oberfläche des Trägermaterials reflektiert bzw. gestreut wird. Die reflektierte bzw. gestreute NIR-Strahlung wird von dem NIR-Detektor erfasst, und das ermittelte NIR-Spektrum wird zur Bestimmung der gewünschten Parameter (hier Auftragsmenge an pulverförmigen Harz) verwendet.

Für die Bestimmung der aufgebrachten Menge an pulverförmigen Harz werden bevorzugt spektrale Daten aus dem gesamten aufgenommenen Spektralbereich verwendet, d.h. es wird nicht eine einzelne, diskrete Wellenlänge, sondern vielmehr ein ganzer Bereich von mehreren Wellenlängen verwendet.

Gemäß dem erfindungsgemäßen Verfahren werden demnach zunächst Referenzproben des mit einem Harz oder Harzmischung beschichteten Trägermaterials bereitgestellt. Für die Bereitstellung der Referenzproben werden verschiedene Mengen an pulverförmigen Harz oder einer pulverförmigen Harzmischung, z.B. 10 g/m², 20 g/m², 40 g/m², 60 g/m², 80 g/m² und/oder 100 g/m² auf das jeweils zu beschichtende Trägermaterial aufgebracht.

Im Falle einer pulverförmigen Harzmischung wurde eine definierte Mischung aus einem ersten pulverförmigen Harz und einem zweiten pulverförmigen Harz, z.B. eine definierte Mischung aus Harnstoffharz und Melaminharz, auf das jeweils zu beschichtende Trägermaterial aufgebracht. So werden Mischungen mit einem Verhältnis von erstem pulverförmigen Harz und zweitem pulverförmigen Harz in einem Verhältnis von 25 Gew% :75 Gew%, 50 : 50 Gew%, 75 Gew% : 25 Gew% als Referenzproben aufgetragen. Als Eckpunkte wurden in dieser Reihe je 100% von ersten pulverförmigen Harz und zweiten pulverförmigen Harz als Referenzproben bestimmt.

Zu beachten ist auch, dass die Referenzprobe gleichartig zu der zu vermessenden Probe ist; d.h. insbesondere die Harzschicht der Referenzprobe weist die gleiche Zusammensetzung wie die zu vermessende Harzschicht auf. Die Gleichartigkeit von zu vermessender Probe und Referenzprobe ist insbesondere bei Verwendung von pulverförmigen Harzschichten mit Zusatzstoffen wie Flammschutzmitteln, Fasern, weiteren Additiven bedeutsam.

Von diesen Referenzproben werden zumindest ein NIR-Spektrum in einem Wellenlängenbereich zwischen 700 nm und 2000 nm, bevorzugt zwischen 900 nm und 1700 nm, insbesondere bevorzugt zwischen 1400 nm und 1600 nm, und besonders vorteilhaft zwischen 1450 nm und 1550 nm aufgenommen.

Die unterschiedlichen quantitativen Mengen an pulverförmigen Harz der Referenzproben werden dann den jeweils aufgenommen NIR-Spektren dieser Referenzproben zugeordnet und es wird ein Kalibriermodell für den Zusammenhang zwischen den spektralen Daten der NIR-Spektren der Referenzproben und den dazugehörigen Harzmengen als Parameterwert mittels einer multivariaten Datenanalyse erstellt; d.h. zu jedem Parameterwert der Referenzprobe korrespondiert ein NIR-Spektrum der Referenzprobe. Die für die verschiedenen Parameter erstellten Kalibriermodelle werden in einem geeigneten Datenspeicher hinterlegt.

Anschließend wird mindestens eine Schicht aus mindestens einem pulverförmigen Harz oder Harzmischung auf ein Trägermaterial aufgebracht, und mindestens ein NIR-Spektrum der auf das Trägermaterial aufgetragenen pulverförmigen Harzschicht aufgenommen. Die quantitative Menge des auf das Trägermaterial aufgebrachten pulverförmigen Harzes oder Harzmischung kann durch Vergleich des für das beschichtete Trägermaterial aufgenommenen NIR-Spektrums mit dem erstellten Kalibriermodell ermittelt werden.

Ein Vergleich und die Interpretation der NIR-Spektren erfolgt sinnvollerweise über den gesamten aufgenommenen Spektralbereich. Dies wird vorteilhaft mit einer an sich bekannten multivariaten Datenanalyse (MDA) durchgeführt. Bei multivariaten Analysemethoden werden in an sich bekannter Weise typischerweise mehrere statistische Variablen zugleich untersucht. Hierzu wird bei diesen Methoden üblicherweise die in einem Datensatz enthaltene Zahl von Variablen reduziert, ohne gleichzeitig die darin enthaltene Information zu mindern.

Im vorliegenden Fall erfolgt die multivariate Datenanalyse über das Verfahren der Partial Least Squares Regression (partielle Regression der kleinsten Quadrate, PLS) wodurch ein geeignetes Kalibrationsmodell erstellt werden kann. Die Auswertung der gewonnenen Daten wird bevorzugt mit einer geeigneten Analysesoftware vorgenommen wie z.B. mit der Analysesoftware SIMCA-P der Firma Umetrics AB oder The Unscrambler der Firma CAMO.

In einer weiteren Ausführungsform ist vorgesehen, für die Erstellung des Kalibriermodells spektrale Daten aus dem NIR- Spektralbereich zwischen 1450 und 1550 nm zu verwenden, die mittels geeigneter mathematischer Methoden vorbehandelt werden und anschließend der multivariaten Datenanalyse zugeführt werden.

Die Bedeutung einer Wellenlänge für die Vorhersage von Parametern der Harzschicht, wie z.B. der Harzmenge, aus dem NIR-Spektrum wird mit Hilfe der Regressionskoeffizienten dargestellt. Dabei haben die Regionen mit großen Koeffizientenbeträgen starken Einfluss auf das Regressionsmodell. So zeigt die Darstellung der Regressionskoeffizienten in einem PLS-Regressionsmodell für die Bestimmung der Harzmenge bzw. des Harzgehaltes, dass der Wellenlängenbereich zwischen 1460 nm und 1530 mit Maximum bei 1490 nm (Absorptionsbande der Amino-Gruppen des Harzes) für die Berechnung des Modells am wichtigsten ist, da hier die Beträge der Regressionskoeffizienten am größten sind. Die anderen Bereiche im Spektrum haben zwar geringeren Informationsgehalt in Bezug auf die NIR-Messung, tragen aber dennoch dazu bei, die weiteren Informationen bzw. störenden Einflussgrößen (wie Transparenz der Schicht, Oberflächenbeschaffenheit der Harzschicht oder des Trägermaterials usw.) zu berücksichtigen bzw. zu minimieren.

Zur Eliminierung von störenden Einflüssen (wie z.B. Beschaffenheit der Oberfläche des Trägermaterials, Farbigkeit der Proben, Lichtstreuung an Feststoffpartikeln oder anderen Additiven usw.) ist es notwendig, die spektralen Daten mit mathematischen Vorbehandlungsmethoden (z. B. derivative Datenvorbehandlung, Standardisierung gemäß SNVT (Standard Normal Variate Transformation), multiplikative Signal-Korrektur (EMSC, Extended Multiplicative Signal Correction usw.) zu bearbeiten. Dabei werden die Basislinieneffekte, die hauptsächlich durch die unterschiedliche Farbe der Proben verursacht werden, aus den Spektren entfernt, überlagernde Banden voneinander getrennt und die Abhängigkeit der Lichtstreuung an der Substratoberfläche oder an den Feststoffpartikeln in der Beschichtung berücksichtigt. Soll z.B. die Harzauftragsmenge auf unbehandelten Oberflächen von Trägermaterialien wie z.B. Holzwerkstoffplatten bestimmt werden, erfolgt die Datenvorbehandlung bevorzugt zur Reduzierung der Lichtstreuung an der rauen Oberfläche des Substrates. Bei der Messung auf Dekorschicht liegt der Schwerpunkt der Kalibrierung und Datenvorbehandlung auf der Entfernung der Basislinienverschiebung.

In einer Ausführungsform des vorliegenden Verfahrens ist das aufzutragende pulverförmige Harz ein Formaldehydharz, bevorzugt ein Harnstoffharz, ein Melaminharz oder ein Phenolharz, insbesondere bevorzugt ein Melamin-Formaldehyd-Harz oder ein Harnstoff-Formaldehyd-Harz. Es können auch weitere Harze auf Basis von pulverförmigen Polyester-, Epoxidharz usw. verwendet werden.

Die Teilchengröße des pulverförmigen Harzes liegt zwischen 20 bis 100 µm, bevorzugt zwischen 40 und 89 µm.

In einer Ausführungsform des vorliegenden Verfahrens wird mindestens eine Mischung aus mindestens zwei pulverförmigen Harzen auf das mindestens eine Trägermaterial aufgebracht wird. Bevorzugt ist eine Mischung aus Harnstoff und Melaminharz. Harnstoff- und Melaminharz weisen sehr ähnliche NIR-Spektren auf, wobei der Harnstoffharzpeak in der Schulter vom Melaminharzpeak liegt.

Die mindestens eine Mischung kann ein erstes pulverförmiges Harz und ein zweites pulverförmiges Harz in einem Verhältnis zwischen 10 Gew%: 90 Gew% und 90 Gew% : 10 Gew%, bevorzugt zwischen 25 Gew% :75 Gew% und 75 Gew% : 25 Gew%, insbesondere bevorzugt zwischen 55 Gew%: 45 Gew% und 45 Gew%: 55 Gew%, z.B. 50 : 50 Gew% enthalten.

In einer Ausführungsform des vorliegenden Verfahrens wird das pulverförmige Harz oder die Mischung aus mindestens zwei pulverförmigen Harzen in einer Menge von bis zu 600 g/m², bevorzugt bis zu 400 g/m², insbesondere bevorzugt bis zu 200 g/m² auf das mindestens eine Trägermaterial aufgebracht. So kann das pulverförmige Harz oder die Mischung aus mindestens zwei pulverförmigen Harzen in einer Menge zwischen 10 und 150 g/m², bevorzugt, zwischen 20 und 100 g/m², insbesondere bevorzugt zwischen 40 und 80 g/m² auf das mindestens eine Trägermaterial aufgebracht werden.

Dem Harz-Pulver können auch weitere Substanzen zugegeben werden. Besonders vorteilhaft ist dabei, dass auch wegen z. B. Aussalz-, Andick-, Absetz-, aushärtungsbeeinflussende Effekten usw. schlecht mit flüssigem Melaminharz verträgliche Substanzen verwendet werden können. Dabei kann es sich um Salze zur Erhöhung der Leitfähigkeit, organische oder anorganische Flammschutzmittel, Cellulosederivate, Radikalfänger, Pigmente, UV-Absorber usw.

Entsprechend kann das verwendete pulverförmige Harz Zuschlagstoffe, wie Pigmente, leitfähige Substanzen und Zellulose enthalten.

Bei Zugabe von Farbpigmenten kann die Schicht aus dem Harzpulver gleichzeitig als weiße Grundierungsschicht für eine ggfs. anschließend aufzudruckende Dekorschicht dienen. Als Farbpigmente können weiße Pigmente wie Titandioxid TiO₂ verwendet werden. Weitere Farbpigmente können Calciumcarbonat, Bariumsulfat oder Bariumcarbonat sein. Der Anteil der Farbpigmente kann bis zu 50 Gew% an der Gesamtpulvermenge betragen.

Die Zugabe von Farbpigmenten zu der ersten Schicht aus Harzpulver erhöht die Deckkraft, so dass diese als (alleinige) Grundlage bzw. Grundierung für die anschließende Dekorschicht einsetzbar sein kann.

Die Menge an Zellulosefasern, die mit dem Harzpulver aufgetragen wird, kann zwischen 0,1 und 1 Gew%, bevorzugt zwischen 0,5 und 0,8 Gew% (bezogen auf die aufzutragende Harzmenge) bzw. zwischen 0,1-0,5 g/m², bevorzugt 0,2-0,4 g/m², insbesondere bevorzugt 0,25 g/m² liegen. Die bevorzugt verwendeten Zellulosefasern sind farblos und liegen in Form eines feinen oder granularen, leicht hygroskopischen Pulvers vor.

Die leitfähigen Substanzen können ausgewählt sein aus der Gruppe enthaltend Russ, Kohlefasern, Metallpulver und Nanopartikel, insbesondere Kohlenstoffnanoröhren. Es können auch Kombinationen dieser Substanzen zum Einsatz kommen.

Die verwendeten Harze enthalten bevorzugt jeweils Additive, wie Härter, Netzmittel (Tenside oder Mischungen davon), Trennmittel und/oder weitere Komponenten.

In einer Ausführungsform wird als Trägermaterial eine Papierlage verwendet. Als Papierlage kommen z.B. Overlaypapiere, Dekorpapiere, oder Kraftpapiere zum Einsatz. Overlaypapiere sind dünne Papiere, welche typischerweise bereits mit einem konventionellen Melaminharz getränkt wurden Es sind ebenfalls Overlaypapiere erhältlich, in denen bereits abriebfeste Partikel, wie zum Beispiel Korundpartikel in das Harz des Overlays eingemischt sind, um die Abriebfestigkeit zu erhöhen. Dekorpapiere sind Spezialpapiere zur Oberflächenveredelung von Holzwerkstoffen, die eine hohe Dekorvielfalt ermöglichen. So sind neben den typischen Aufdrucken von diversen Holzstrukturen weitergehende Aufdrucke von geometrischen Formen oder künstlerischen Produkten erhältlich. Eine Einschränkung in der Motivwahl gibt es faktisch nicht. Kraftpapiere weisen eine hohe Festigkeit auf und bestehen aus Zellstofffasern, denen Stärke, Alaun und Leim zugesetzt sind, um Oberflächeneffekte und Festigkeitssteigerungen zu erzielen.

In einer anderen Ausführungsform wird als Trägermaterial eine Trägerplatte verwendet. In diesem Fall ist diese Trägerplatte bevorzugt eine Platte aus einem Holzwerkstoff, aus Kunststoff, einem Holzwerkstoff-Kunststoff-Gemisch oder einem Verbundwerkstoff, insbesondere eine Span-, mitteldichte Faser (MDF)-, hochdichte Faser (HDF)-, Grobspan (OSB)- oder Sperrholzplatte, eine Zementfaserplatte, Gipsfaserplatte oder eine WPC-Platte (Wood Plastic Composites) oder eine SPC-Platte (Stone Plastic Composite).

Wie oben bereits angedeutet, kann das erfindungsgemäße Verfahren zur Bestimmung der auf das Trägermaterial aufgebrachten Menge an pulverförmigen Harz oder Harzmischung kontinuierlich und online in einer Fertigungslinie, insbesondere in einer Produktionslinie zur Herstellung von Holzwerkstoffplatten oder in einer Produktionslinie zur Imprägnierung von Papierlagen, erfolgen. Insbesondere kann das Verfahren in einem automatisch geregelten System mit Alarmmeldung durchgeführt werden.

Die Bestimmung der auf mindestens ein Trägermaterial aufgebrachten Menge von pulverförmigen Harz kann dabei mehrmals in der Fertigungslinie, insbesondere jeweils nach Verlassen einer Vorrichtung zum Auftragen einer Schicht aus einem pulverförmigen Harz, erfolgen.

In einer Ausführungsform des vorliegenden Messverfahrens ist vorgesehen, dass der mindestens eine NIR-Messkopf sich quer zur Laufrichtung des mit dem pulverförmigen Harz versehenen Trägermaterials in der Fertigungslinie bewegt und über die gesamte Breite des Trägernaterials traversiert, um bestimmte Problembereiche, insbesondere Minderaufträge im Rand- oder Mittelbereich des Trägermaterials zu analysieren.

In einer weiteren Ausführungsform des vorliegenden Messverfahrens ist vorgesehen, dass der mindestens eine NIR-Messkopf sich in Laufrichtung des mit dem pulverförmigen Harz versehenen Trägermaterials in der Fertigungslinie bewegt.; d.h. in diese Ausführungsform kann der Messkopf stationär in einer Position verbleibt, die z. B. als besonders kritisch angesehen wird.

Es wird somit ein Verfahren bereitgestellt, in welchem durch die Verwendung eines NIR-Messkopfes, die Menge und Zusammensetzung eines aufgetragenen Harzpulvers bzw, einer Harzmischung aus einem einzigen NIR-Spektrum bzw. der Reflektion bzw. Streuung von NIR-Strahlung bestimmt werden kann, und zwar durch eine berührungslose Messung. Die mit dem Messkopf oder den Messköpfen ermittelten Daten werden in einer vorteilhaften Ausprägung der Erfindung direkt zur Anlagensteuerung oder -regelung verwendet.

Zudem wird in einer weiteren vorteilhaften Ausprägung der Erfindung durch die Speicherung der Daten eine Verbesserung der Qualitätskontrolle ermöglicht. Auch bei Anlagenversuchen können die gespeicherten Daten vorteilhaft einen Beitrag zur Auswertung liefern, z.B. Inbetriebnahme einer Anlage bei Neuinstallation oder nach einer Wartung oder Reparatur oder zu in-situ Testzwecken von neuen Produktions- oder Messverfahren. Durch das sofortige Vorliegen der Messwerte und der hohen Messfrequenz wird eine sehr enge Kontrolle bzw. Steuerung oder Regelung der Anlagen ermöglicht.

Die Vorteile des vorliegenden Verfahrens sind vielfältig: Berührungslose Multiparameterbestimmung ("real time"- oder "Echtzeit"-Messung) mit deutlich reduzierter zeitlicher Verzögerung in der Auswertung der gemessenen Parameterwerte; verbesserte Anlagensteuerung bzw. -regelung, Verringerung des Ausschusses, Verbesserung der Qualität der auf der Anlage hergestellten Produkte, Verbesserung der Anlagenverfügbarkeit.

Das Steuerungssystem der jeweiligen Fertigungsanlage umfasst mindestens eine computergestützte Auswerteeinheit (bzw. Prozessoreinheit) und eine Datenbank. In der Auswerteeinheit erfolgt der Abgleich bzw. Vergleich des für das Produkt (d.h. beschichtetes Trägermaterial) gemessenen NIR-Spektrums mit den für die jeweils einzelnen Parameter erstellten Kalibriermodellen. Die so bestimmten Parameterdaten werden in der Datenbank gespeichert.

Die mit dem vorliegenden spektroskopischen Verfahren bestimmten Daten können zur Steuerung der jeweiligen Fertigungslinie verwendet werden. Die berührungslos gemessenen Parameterwerte des NIR-Multimesskopfes ("Ist-Werte") können, wie zuvor bereits beschrieben, direkt und in "real time" für die Steuerung bzw. Regelung der betreffenden Anlage verwendet werden, indem beispielsweise die gemessenen und in der Datenbank, z.B. einer relationalen Datenbank, Ist-Werte gespeichert und mit dort vorhandenen Soll-Werten dieser Parameter verglichen werden. Die sich ergebenden Differenzen werden anschließend zur Steuerung bzw. Regelung der Produktionslinie verwendet.

Für den Abgleich und die Steuerung der jeweiligen Fertigungslinie wird ein computerimplementiertes Verfahren sowie ein Computerprogramm umfassend Befehle, die bei der Ausführung des Programms durch einen Computer diesen veranlassen das computerimplementierte Verfahren auszuführen, bereitgestellt. Das Computerprogramm ist in einer Speichereinheit des Steuerungssystems der jeweiligen Fertigungslinie gespeichert.

Im Folgenden werden zwei Verfahren und Fertigungslinien, in denen das erfindungsgemäße Messverfahren einsetzbar ist, im Detail beschrieben.

So umfasst ein erstes Verfahren zur Herstellung einer mit einem Dekor versehenen Holzwerkstoffplatte die folgenden Schritte:
a) Aufbringen von mindestens einer ersten Schicht aus mindestens einem pulverförmigen Harz oder Harzmischung auf mindestens eine Seite einer Holzwerkstoffplatte und Anschmelzen der mindestens einen aufgebrachten Schicht aus einem pulverförmigen Harz;
b) Aufbringen von mindestens einer Dekorschicht mittels eines Direktdruckverfahrens; und
c) Aufbringen von mindestens einer weiteren (zweiten) Schicht aus mindestens einem pulverförmigen Harz oder Harzmischung auf die mindestens eine aufgedruckte Dekorschicht und Anschmelzen der mindestens einen auf die Dekorschicht aufgestreuten Schicht aus pulverförmigen Harz.

Das erfindungsgemäße Messverfahren zur Bestimmung der Auftragsmenge des pulverförmigen Harzes (oder pulverförmiger Harzmischung) wird bevorzugt im Anschluss an den jeweiligen Schritt des Aufbringens der ersten und/oder zweiten und / oder jeder weiteren Schicht aus pulverförmigen Harz durchgeführt.

"Anschmelzen" oder "Angelieren" im Sinne der vorliegenden Anmeldung bedeutet, dass die Harzschicht noch nicht vollständig polymerisiert ist, sondern vielmehr wird die Polymerisation auf einer Zwischenstufe gestoppt, in welcher eine weitergehende Vernetzung bzw. Polymerisation zu einem späteren Verarbeitungszeitpunkt noch möglich ist. Der Sinn eines "Angelierens" liegt somit üblicherweise darin begründet, dass man zu einem späteren Zeitpunkt weitere Funktionsschichten auf die bereits aufgetragene Schutzschicht aufbringen oder das Produkt erst in weiteren Verarbeitungsschritten fertigstellen möchte.

In einer bevorzugten Ausführungsform wird das Harzpulver mittels elektrostatischer Aufladung aufgetragen. Der Auftrag kann auch mittels Pulverbeschichtung nach dem Triboverfahren erfolgen. Hierbei erfolgt eine Reibungsaufladung des aufzutragenden Pulvers.

Das Anschmelzen der aufgebrachten Schicht aus pulverförmige Harz oder Harzmischung kann unter Verwendung eines IR-Strahlers, oder auch Mikrowellensysteme oder ähnliches erfolgen. Die Verwendung von IR-Strahlern ist besonders bevorzugt.

Die Oberfläche der Trägerplatte kann oberflächenbehandelt sein, z.B. im Falle einer Holzwerkstoff-Trägerplatte kann die Oberfläche geschliffen sein oder auch nichtgeschliffen sein und mit einer Presshaut versehen sein. Im Falle einer Kunststoff-Trägerplatte kann die Oberfläche koronabehandelt sein.

In einer bevorzugten Ausführungsform wird in einem nächsten Schritt mindestens eine Grundierung auf die (erste) angeschmolzene Harzpulverschicht zur Erhöhung der Deckkraft aufgetragen.

Die Grundierung umfasst bevorzugt Kasein, Maisstärke oder Sojaprotein und kann anorganische Farbpigmente enthalten und somit als Grundierungsschicht für die anschließend aufzudruckende Dekorschicht dienen.

Als Farbpigmente können wiederum weiße Pigmente wie Titandioxid TiO₂ verwendet werden. Weitere Farbpigmente können Calciumcarbonat, Bariumsulfat oder Bariumcarbonat, aber auch Eisenoxidpigmente (für eine bräunliche Grundierung) sein. Die Grundierung kann neben den Farbpigmenten und dem Kasein, der Maisstärke oder Sojaprotein noch Wasser als Lösemittel enthalten.

Die Menge der aufgetragenen flüssigen Grundierung kann zwischen 10 und 50 g/m², bevorzugt zwischen 15 und 30 g/m², insbesondere bevorzugt zwischen 20 und 25 g/m² liegen.

Es ist ebenfalls denkbar, dass die Grundierung aus mindestens einer, bevorzugt aus mindestens zwei oder mehreren nacheinander aufgetragenen Lagen bzw. Aufträgen besteht (z.B. bis zu fünf Aufträgen), wobei die Auftragsmenge zwischen den Lagen bzw. Aufträgen gleich oder verschieden ist, d.h. die Auftragsmenge einer jeden einzelnen Lagen kann variieren.

Die Grundierung kann unter Verwendung einer Walze auf die Holzwerkstoffträgerplatte mit anschließender Trocknung aufgebracht werden. Es ist auch möglich, die Grundierung mittels Digitaldruck auf die Kunststoffträgerplatte aufzubringen. Die für das digitale Drucken der Grundierung verwendeten Digitaldrucktinten basieren bevorzugt auf UV-Tinten oder Tinten auf Wasserbasis, die mit weißen Farbpigmenten angereichert sind. Es ist aber auch möglich wasserbasierte Digitaldrucktinten oder so genannte Hybridtinten zu verwenden. Ein Auftrag mittels Digitaldruck ist vorteilhaft, da die Druckanlage deutlich kürzer ist als eine Walzvorrichtung und somit Platz, Energie und Kosten spart.

In einer weiteren Ausführungsvariante des vorliegenden Verfahrens wird auf die Grundierung eine Primerschicht, bevorzugt als Einmalauftrag mit anschließender Trocknung, aufgebracht. Die Primerschicht ist insbesondere im Falle eines anschließenden Tiefdruckverfahrens (mit Walzen) sinnvoll, wohingegen diese bei Anwendung eines Digitaldruckverfahrens nicht zwingend erforderlich ist.

Die Menge des aufgetragenen flüssigen Primers liegt zwischen 10 und 30 g/m², bevorzugt zwischen 15 und 20 g/m². Als Primer werden bevorzugt Verbindungen auf Polyurethanbasis verwendet.

Als Direktdruckverfahren zum Bedrucken der Holzwerkstoffplatte werden vorteilhafterweise Tiefdruck- und Digitaldruckverfahren angewendet. Das Tiefdruckverfahren ist eine Drucktechnik, bei der die abzubildenden Elemente als Vertiefungen in einer Druckform vorliegen, die vor dem Druck eingefärbt wird. Die Druckfarbe befindet sich vornehmlich in den Vertiefungen und wird aufgrund von Anpressdruck der Druckform und von Adhäsionskräften auf den zu bedruckenden Gegenstand, wie zum Beispiel ein Trägermaterial, übertragen. Bei der Verwendung des indirekten Tiefdrucks werden mehrere Druckwalzen eingesetzt.

In einer besonders bevorzugten Ausführungsform wird das mindestens eine Dekor mittels Digitaldruckverfahren auf die (oberflächenbehandelte und vorbeschichtete) Trägerplatte aufgebracht. Beim Digitaldruck wird das Druckbild direkt von einem Computer in eine Druckmaschine, wie zum Beispiel einen Laserdrucker oder Tintenstrahldrucker, übertragen. Dabei entfällt die Verwendung einer statischen Druckform. Der Dekordruck erfolgt nach dem Inkjet-Prinzip im Single-Pass bei dem die gesamte Breite der zu bedruckenden Oberseite überspannt wird, wobei die Platten unter dem Drucker hindurch bewegt werden. Es ist aber auch möglich, dass die zu bedruckende Trägerplatte unter dem Drucker angehalten wird und dieser die Oberfläche beim Drucken mindestens einmal überfährt.

Die Druckfarben sind in separaten Druckkopfreihen zusammengefasst, wobei je Farbe eine oder zwei Reihen Druckköpfe vorgesehen sein können. Die Farben der Digitaldrucktinten sind beispielsweise schwarz, blau, rot, rötliches gelb, grünliches gelb, optional kann auch CMYK verwendet werden. Die Digitaldrucktinten basieren optional auf den gleichen Pigmenten, die für analogen und/oder digitalen Druck mit wasserbasierten Tinten verwendet werden. Die Digitaldrucktinten basieren bevorzugt auf UV-Tinten. Es ist aber auch möglich wasserbasierte Digitaldrucktinten oder so genannte Hybridtinten zu verwenden. Nach dem Drucken erfolgt eine Trocknung und/oder Bestrahlung des Dekordrucks.

Die Druckfarben werden in einer Menge zwischen 1 und 30 g/m², bevorzugt zwischen 3 und 20 g/m², insbesondere bevorzugt zwischen 3 und 15 g/m² aufgebracht.

Zusammen mit dem Dekor werden ebenfalls die für die Ausrichtung in der Presse erforderlichen Markierungen aufgedruckt.

Es ist möglich, die bedruckte Platte nach diesem Verfahrensschritt einer Zwischenlagerung zuzuführen. Die aufgebrachte und angeschmolzene Harzpulverschicht dient in diesem Falle als Schutzschicht, die einerseits dem Schutz der bedruckten Oberfläche im Falle der Zwischenlagerung dient und andererseits (aufgrund der noch nicht vollständig ausgehärteten Harzschicht) eine weitere Verarbeitung ermöglicht. Insbesondere bei komplexen Verarbeitungsprozessen ist eine Entkopplung bestimmter Arbeitsschritte aus Gründen von Kosten, Technologie usw. nötig. Es können beispielsweise verkettete Produktionslinien bezüglich ihrer Produktivität stark unterschiedlich sein. Dann müssen zwangsläufig Pufferlager aufgebaut werden, in denen Materialien aufeinandergestapelt werden. Weiter können in einer Produktionslinie Mehrfachdurchläufe nötig sein, weil Auftragsmengen usw. nicht in einem Durchlauf realisierbar sind. In all diesen Fällen sind angetrocknete bzw. angehärtete Oberflächen von Vorteil, da diese einerseits einen Schutz der bedruckten Oberfläche im Falle einer Zwischenlagerung und andererseits eine weitere Verarbeitung ermöglichen.

In einer weitergehenden Ausführungsform werden auf die Dekorschicht oder die in Schritt c) aufgebrachte Harzpulverschicht abriebfeste Partikel gleichmäßig aufgestreut (Schritt d).

Als abriebfeste Partikel können Partikel aus Korund (Aluminiumoxide), Borcarbide, Siliziumdioxide, Siliziumcarbide verwendet werden. Besonders bevorzugt sind Korundpartikel. Dabei handelt es sich in bevorzugter Weise um Edelkorund (weiß) mit einer hohen Transparenz, damit die optische Wirkung des darunterliegenden Dekors so wenig wie möglich nachteilig beeinflusst wird. Korund weist eine ungleichmäßige Raumform auf.

Die Menge an aufgestreuten abriebfesten Partikeln beträgt 7 bis 50 g/m², bevorzugt 10 bis 30 g/m², insbesondere bevorzugt 15 bis 25 g/m². Die Menge der aufgestreuten abriebfesten Partikel hängt von der zu erreichenden Abriebklasse und der Korngröße ab. So liegt die Menge an abriebfesten Partikeln im Falle der Abriebklasse AC3 im Bereich zwischen 10 bis 15 g/m², in der Abriebklasse AC4 zwischen 15 bis 20 g/m² und in der Abriebklasse AC5 zwischen 20 bis 35 g/m² bei Verwendung der Körnung F200. Im vorliegenden Fall weisen die fertigen Platten bevorzugt die Abriebklasse AC4 auf.

Es werden abriebfeste Partikel mit Körnungen in den Klassen F180 bis F240, bevorzugt F200 verwendet. Die Korngröße der Klasse F180 umfasst einen Bereich von 53 - 90 µm, F220 von 45-75 µm, F230 34-82 µm, F240 28-70 µm (FEPA Norm). In einer Variante werden als abriebfeste Partikel Edelkorund weiß F180 bis F240, bevorzugt in einem Hauptkornbereich von 53-90 µm verwendet. In einer besonders bevorzugten Ausführungsform werden Korundpartikel der Klassen F180-220 verwendet. Die abriebfesten Partikel dürfen nicht zu feinkörnig sein (Gefahr der Staubbildung), aber auch nicht zu grobkörnig sein. Die Größe der abriebfesten Partikel stellt somit ein Kompromiss dar. In einer weitergehenden Ausführungsform können silanisierte Korundpartikel verwendet werden. Typische Silanisierungsmittel sind Aminosilane.

In einer weitergehenden Ausführungsform des vorliegenden Verfahrens wird mindestens eine dritte Schicht aus mindestens einem pulverförmigen Harz (Schritt e), insbesondere auf die Schicht aus abriebfesten Partikeln, aufgebracht und angeschmolzen. Diese Schicht dient als Trennschicht zur Absperrung der abriebfesten Partikel.

In einer weitergehenden Ausführungsform des vorliegenden Verfahrens werden, insbesondere auf die mindestens eine dritte angeschmolzene Harzpulverschicht, Glaskugeln aufgestreut (Schritt f). Die Glaskugeln dienen als Abstandshalter zwischen abriebfesten Partikeln und nachfolgenden Pressblech fungieren. Damit kann der Blechverschleiß zumindest teilweise reduziert werden.

Die bevorzugt verwendeten Glaskugeln weisen einen Durchmesser von 60 - 120 µm, bevorzugt 80-90 µm auf. Der Durchmesser der Glaskugeln ist auf die durchschnittliche Partikelgröße der verwendeten abriebfesten Partikel abgestimmt, um eine optimale Absperrung zum nachfolgenden Pressblech zu gewährleisten. So werden im Falle von Korund F220 Glaskugeln mit einem Durchmesser zwischen 70-90 µm verwendet, und im Falle von Korund F180 Glaskugeln mit einem Durchmesser zwischen 80-120 µm verwendet. Die Menge an Glaskugeln beträgt 5 bis 30 g/m², bevorzugt 8 bis 20 g/m², insbesondere bevorzugt 8 bis 15 g/m². Die Glaskugeln können ebenfalls in silanisierter Form vorliegen. Durch die Silanisierung der Glaskugeln wird die Einbettung der Glasperlen in die Harzmatrix verbessert.

In einer weitergehenden Ausführungsform des vorliegenden Verfahrens wird mindestens eine vierte Schicht aus mindestens einem pulverförmigen Harz (Schritt f), insbesondere auf die Schicht aus Glaskugeln, aufgebracht und angeschmolzen. Diese Schicht dient zur Absperrung der Glaskugeln und als Abschlussschicht.

In einer weiteren Ausführungsform des vorliegenden Verfahrens wird der Schichtaufbau in einer Kurztaktpresse (KT-Presse) verpresst(Schritt h). Der Pressschritt erfolgt unter Druck- und Temperatureinfluss bei Temperaturen zwischen 180 und 250°C, bevorzugt zwischen 200 und 230°C, insbesondere bevorzugt bei 200°C und einem Druck zwischen 30 und 60 kg/cm², insbesondere bevorzugt zwischen 40 und 50 kg/cm². Die Presszeit liegt zwischen 8 und 30 sec, bevorzugt zwischen 10 und 25 sec.

Bevorzugt wird die beschichtete Holzwerkstoffplatte in der Kurztaktpresse zu einem in der Kurztaktpresse befindlichen strukturierten Pressblech anhand von Markierungen auf der Holzwerkstoffplatte ausgerichtet, so dass eine Deckungsgleichheit zwischen dem Dekor auf der Holzwerkstoffplatte und der einzuprägenden Struktur des Pressbleches hergestellt wird.

Dies ermöglicht die Herstellung einer dekorsynchronen Struktur. Während des Verpressens kommt es zu einer Aufschmelzung der Melaminharzschichten und Ausbildung eines Laminats durch Kondensationsreaktion unter Einschluss der Bestandteile Korund/Glas/Fasern.

Auf die Unterseite der Holzwerkstoffplatte kann ein Gegenzug, z.B. aus mehreren Harzschichten ohne Zuschlagstoffe oder ein Gegenzugpapier, aufgetragen werden. Hierdurch wird gewährleistet, dass die durch die aufgebrachten Schichten beim Verpressen entstehenden Zugkräfte auf die Holzwerkstoffplatte sich gegenseitig aufheben. Der auf die Unterseite aufgebrachte Gegenzug entspricht im Schichtaufbau und der jeweiligen Schichtdicke ungefähr der auf der Oberseite aufgebrachten Schichtfolge jedoch ohne die Zugabe der Zuschlagstoffe abriebfesten Partikel oder Glaskugeln. Es kann auch ein Imprägnat als Gegenzug verwendet werden.

Die Fertigungslinie zur Herstellung einer mit einem Dekor versehenen Trägerplatte, insbesondere Holzwerkstoffplatte kann demnach folgende Elemente umfassen:
- mindestens eine Auftragsvorrichtung zum Auftragen einer ersten Harzpulverschicht, die Fasern enthalten kann, auf die Oberseite der Holzwerkstoffplatte und mindestens eine Vorrichtung zum Anschmelzen der ersten Harzpulverschicht, insbesondere ein IR-Strahler;
- opt. mindestens eine Auftragsvorrichtung zum Auftragen von mindestens einer Grundierungsschicht;
- opt. mindestens eine Auftragsvorrichtung zum Auftragen von mindestens einer Primerschicht;
- mindestens eine Druckvorrichtung,
- opt. mindestens eine Auftragsvorrichtung zum Auftragen einer weiteren Harzpulverschicht und mindestens eine Vorrichtung zum Anschmelzen der Harzpulverschicht, insbesondere ein IR-Strahler;,
- opt. mindestens eine Vorrichtung zum Aufstreuen einer vorbestimmten Menge an abriebfesten Partikeln;
- mindestens eine Auftragsvorrichtung zum Auftragen einer weiteren Harzpulverschicht und mindestens eine Vorrichtung zum Anschmelzen der Harzpulverschicht, insbesondere ein IR-Strahler;
- opt. mindestens eine Vorrichtung zum Aufstreuen einer vorbestimmten Menge an Glaskugeln;
- opt mindestens eine Auftragsvorrichtung zum Auftragen einer weiteren Harzpulverschicht und mindestens eine Vorrichtung zum Anschmelzen der ersten Harzpulverschicht, insbesondere ein IR-Strahler; und
   - opt. mindestens eine in Verarbeitungsrichtung hinter der letzten Trocknungsvorrichtung angeordnete Kurztaktpresse;
- wobei nach der Auftragsvorrichtung zum Auftragen einer ersten Harzpulverschicht und/oder nach den Auftragsvorrichtungen zum Auftragen jeweils einer weiteren Harzpulverschicht mindestens ein NIR-Messkopf, bevorzugt mindestens ein NIR-Multimesskopf, zur Aufnahme von mindestens einem NIR-Spektrum der mit dem pulverförmigen Harz beschichteten Holzwerkstoffplatte vorgesehen ist.

Wie erwähnt, kann das erfindungsgemäße NIR- Messverfahren auch für die Beschichtung von Papierlagen mit Harzpulver verwendet werden.

Ein Verfahren zur Beschichtung einer Papierlage als Trägermaterial umfasst die folgenden Schritte:
- Aufbringen von mindestens einer Schicht aus mindestens einem pulverförmigen Harz (oder pulverförmiger Harzmischung) auf mindestens eine Seite einer Papierlage und Anschmelzen der mindestens einen aufgebrachten Schicht aus einem pulverförmigen Harz oder Harzmischung; und
- Trocknen und Härten des Schichtaufbaus.

Das erfindungsgemäße Messverfahren zur Bestimmung der Auftragsmenge des pulverförmigen Harzes (oder pulverförmiger Harzmischung) wird bevorzugt im Anschluss an den Schritt des Aufbringens der Schicht aus pulverförmigen Harz oder Harzmischung durchgeführt.

Eine für die Beschichtung von Papierlagen mit einem pulverförmigen Harz verwendete Fertigungslinie umfasst mindestens eine Auftragsvorrichtung zum Auftragen von mindestens einer Harzpulverschicht, insbesondere mittels Tribopistolen, mindestens eine Vorrichtung zum Anschmelzen der Harzpulverschicht, bevorzugt unter Verwendung eines IR-Strahlers, und mindestens eine Vorrichtung zum Trocknen und Härten der beschichteten Papierlage.

Mindestens ein NIR-Messkopf ist nach der Auftragsvorrichtung zum Auftragen einer Harzpulverschicht zur Aufnahme von mindestens einem NIR-Spektrum der mit dem pulverförmigen Harz beschichteten Papierlage vorgesehen.

In beiden Ausführungsformen der Fertigungslinien (Holzwerkstoffplatte, Imprägnat) sind die NIR-Messköpfe jeweils mit einem Steuerungssystem mit Auswerteeinheit und Datenbank zur Prozessierung und Speicherung der ermittelten NIR-Daten verbunden. Bei Abweichungen der gemessenen Ist-Werte von den Soll-Werten erfolgt eine automatische Anpassung durch die Anlagensteuerung bzw. -regelung. Grundsätzlich liefern alle in einer Produktionslinie verwendeten NIR-Messköpfe die von ihnen gemessenen Istwerte an die zentrale steuer- und Auswerte-Einheit liefern, die bei Abweichung der gemessenen Ist-Werte z.B. eines einzigen der NIR-Messköpfe von den entsprechenden Sollvorgaben den Produktionsablauf entsprechend regelt oder vorausschauend steuert.

Die Erfindung wird nachfolgend an Ausführungsbeispielen unter Bezugnahme auf die Figuren näher erläutert. Es zeigen:
- Figur 1:: NIR-Spektren verschiedener Mengen Melaminpulverharz
- Figur 2:: NIR-Spektren verschiedener Mengen Harnstoffharz
- Figur 3:: NIR-Spektren von Harnstoff- und Melamin-Pulverharzen sowie von Gemischen aus beiden Pulverharzen

### Ausführungsbeispiel 1:

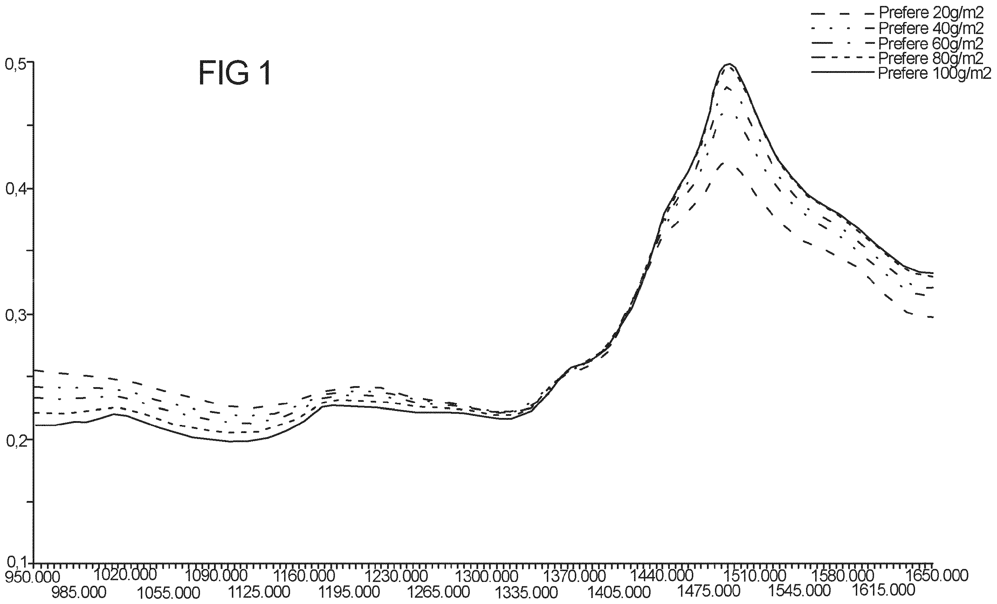

Auf ein Dekorpapier in einem mittleren Farbton werden verschiedene Mengen an pulverförmigem Melaminharz aufgetragen ( 20, 40, 80 und 100 g Pulverharz /m² ). Von den unterschiedlichen Auftragsmengen wurden mit Hilfe eines NIR-Messkopfes Spektren angefertigt. Aus diesen Spektren wurden mit Hilfe einer Software ein Kalibrationsmodell erstellt. Als besonders geeignet erwiess sich dabei der Peak bei ca. 1500 nm (siehe Fig. 1). Danach wurden dann unbekannte Auftragsmengen von Melaminharz auf verschiedenen Trägermaterialien mit unterschiedlichen Farbtönen des Untergrundes bestimmt.

### Ausführungsbeispiel 2:

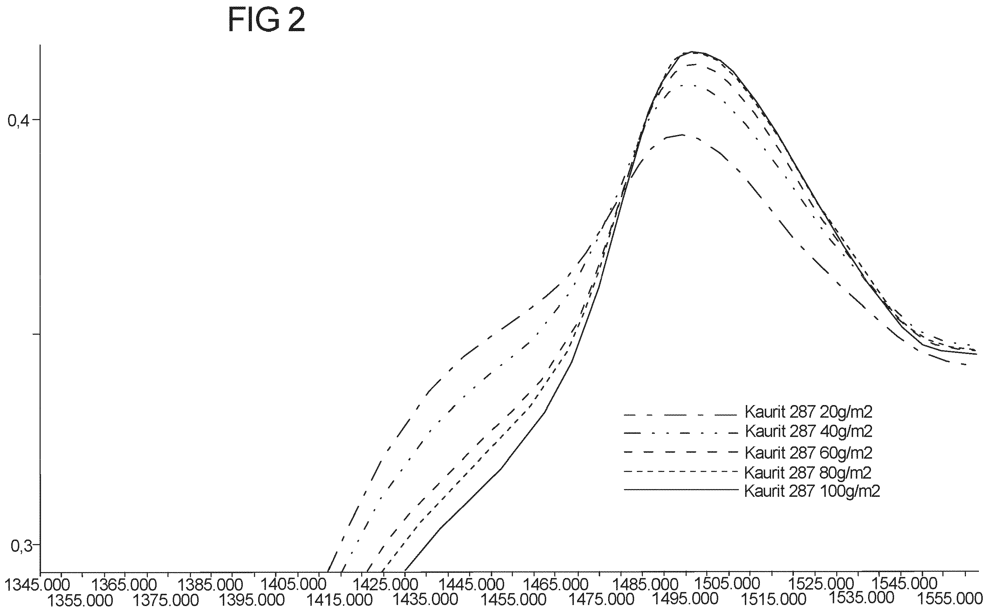

Die gleiche Vorgehensweise wurde bei pulverförmigem Harnstoffharz gewählt. Dabei wurden die gleichen Auftragsmengen analysiert. Auch hier konnte der Peak um ca. 1500 nm zur Erstellung eines Kalibrationsmodels genutzt werden (siehe Fig. 2).

### Ausführungsbeispiel 3:

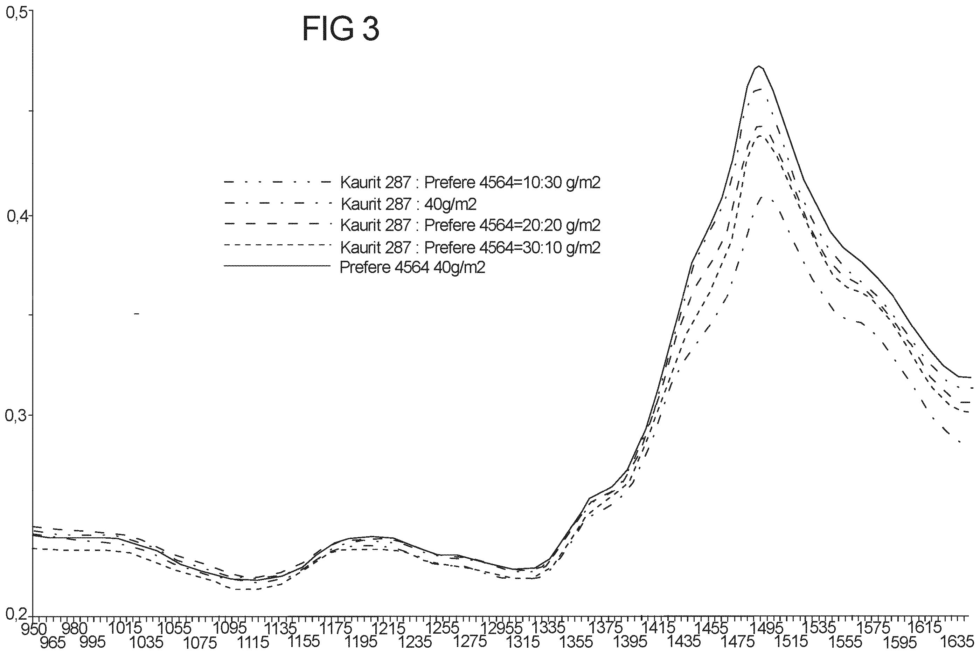

Danach wurden dann Gemische von Harnstoff- und Melaminharz angefertigt. Die Gesamtmenge betrug jeweils 40 g/m². Es wurde zwischen 100%, 25%/75%, 50%/50%, 25%/75% und 100% variiert. Auch hier zeigte sich, dass eine Analyse möglich war. Die Spektren der Gemische lagen zwischen den Spektren von Harnstoff-Pulverharz und MelaminPulverharz. Sie näherten sich mit steigendem Melamingehalt dem Melaminspektrum an. Auch hier eignet sich der Peak um 1500 nm zur Erstellung einer Kalibrierung (siehe Fig. 3). Nach Erstellung einer Kalibrierung kann so bei Pulvergemischen die Homogenität der Mischung geprüft werden oder auch Auftragsmengen bestimmt werden.

## Patentansprüche

1. Verfahren zur Steuerung einer Produktionslinie zum Herstellung eines beschichteten Trägermaterials, wobei mindestens eine Schicht aus mindestens einem pulverförmigen Harz oder Harzmischung auf das mindestens ein Trägermaterial aufgetragen wird,
wobei die Produktionslinie mindestens umfasst
- mindestens einen NIR-Multimesskopf zur Aufnahme von mindestens einem NIR-Spektrum des mit dem pulverförmigen Harz oder Harzmischung beschichteten Trägermaterials unter Verwendung des mindestens einen NIR-Messkopfes in einem Wellenlängenbereich zwischen 1400 nm und 1600 nm, bevorzugt zwischen 1450 nm und 1550 nm;
- mindestens ein Steuerungssystem zur Steuerung der Produktionslinie, wobei das Steuerungssystem der Produktionslinie mindestens eine computergestützte Auswerteeinheit und eine Datenbank umfasst,
- wobei die Auswerteeinheit konfiguriert ist, das für das mit dem pulverförmigen Harz oder Harzmischung beschichtete Trägermaterial aufgenommene NIR-Spektrum mit einem erstellten Kalibrationsmodell zu vergleichen, um die quantitativen Menge des auf das Trägermaterial aufgebrachten pulverförmigen Harzes oder Harzmischung zu bestimmen,
- wobei die Datenbank konfiguriert ist, die so bestimmten Parameterdaten über die Auftragsmenge an pulverförmigen Harz zu speichern,
- wobei das Steuerungssystem konfiguriert ist, die bestimmten Parameter zur Steuerung der Produktionslinie zu verwenden,
wobei das Kalibrationsmodell anhand von Referenzproben wie folgt bestimmt wird:
- Aufbringen von mindestens einem pulverförmigen Harz oder einer pulverförmigen Mischung aus mindestens zwei Harzen in einem definierten Mischungsverhältnis in jeweils unterschiedlichen quantitativ definierten Mengen auf jeweils ein Trägermaterial als Referenzproben;
- Aufnahme von mindestens einem NIR-Spektrum jeder der Referenzproben unter Verwendung von mindestens einem NIR-Messkopf in einem Wellenlängenbereich zwischen 1400 nm und 1600 nm, bevorzugt zwischen 1450 nm und 1550 nm;
- Zuordnung der unterschiedlichen quantitativen Mengen an pulverförmigen Harz oder Harzmischung der Referenzproben zu den aufgenommenen NIR-Spektren der genannten Referenzproben; und
- Erstellung des Kalibrationsmodells für den Zusammenhang zwischen den spektralen Daten der NIR-Spektren und den dazugehörigen quantitativen Mengen an pulverförmigen Harz oder Harzmischung der Referenzproben mittels einer multivariaten Datenanalyse.

2. Verfahren nach Anspruch 1, **dadurch gekennzeichnet, dass** der NIR-Multimesskopf konfiguriert ist, die gemessenen Parameter (Ist-Werte) an die Auswerte-Einheit zu liefern, die bei Abweichung der gemessenen Parameter (Ist-Werte) von den entsprechenden Soll-Werten dieser Parameter den Produktionsablauf entsprechend steuert.

3. Verfahren nach einem der vorhergehenden Ansprüche, **dadurch gekennzeichnet, dass** das pulverförmige Harz ein Formaldehydharz, bevorzugt ein Harnstoffharz, ein Melaminharz oder ein Phenolharz, insbesondere bevorzugt ein Melamin-Formaldehyd-Harz oder ein Harnstoffharz, ist.

4. Verfahren nach einem der vorhergehenden Ansprüche, **dadurch gekennzeichnet, dass** mindestens eine Mischung aus einem ersten pulverförmigen Harz und einem zweiten pulverförmigen Harz auf das mindestens eine Trägermaterial aufgebracht wird.

5. Verfahren nach Anspruch 4, **dadurch gekennzeichnet, dass** die mindestens eine Mischung ein erstes pulverförmiges Harz und ein zweites pulverförmiges Harz in einem Verhältnis zwischen 10 Gew%: 90 Gew% und 90 Gew% : 10 Gew%, bevorzugt zwischen 25 Gew% :75 Gew% und 75 Gew% : 25 Gew%, insbesondere bevorzugt zwischen 55 Gew%: 45 Gew% und 45 Gew%: 55 Gew%, z.B. 50 : 50 Gew% enthält.

6. Verfahren nach einem der vorhergehenden Ansprüche, **dadurch gekennzeichnet, dass** das pulverförmige Harz oder die Mischung aus mindestens zwei pulverförmigen Harzen in einer Menge zwischen 10 und 150 g/m², bevorzugt, zwischen 20 und 100 g/m², insbesondere bevorzugt zwischen 40 und 80 g/m² aufgebracht wird.

7. Verfahren nach einem der vorhergehenden Ansprüche, **dadurch gekennzeichnet, dass** das mindestens eine Trägermaterial mindestens eine Papierlage, insbesondere mindestens ein Rohpapier oder mindestens ein vorbehandeltes, imprägniertes Papier, umfasst.

8. Verfahren nach Anspruch 7, **dadurch gekennzeichnet, dass** die Produktionslinie eine Fertigungslinie zur Imprägnierung von Papierlagen ist, umfassend mindestens eine Auftragsvorrichtung zum Auftragen von mindestens einer Harzpulverschicht, insbesondere mittels Tribopistolen, mindestens eine Vorrichtung zum Anschmelzen der Harzpulverschicht, bevorzugt unter Verwendung eines IR-Strahlers, und mindestens eine Vorrichtung zum Trocknen und Härten der beschichteten Papierlage.

9. Verfahren nach einem der Ansprüche 7-8, **dadurch gekennzeichnet, dass** mindestens ein NIR-Messkopf nach der Auftragsvorrichtung zum Auftragen einer Harzpulverschicht zur Aufnahme von mindestens einem NIR-Spektrum der mit dem pulverförmigen Harz beschichteten Papierlage vorgesehen ist.

10. Verfahren nach einem der vorhergehenden Ansprüche, **dadurch gekennzeichnet, dass** das mindestens eine Trägermaterial eine Platte aus einem Holzwerkstoff, insbesondere eine Span-, mitteldichte Faser (MDF)-, hochdichte Faser (HDF)-, Orientierte Grobspan(OSB)- oder Sperrholzplatte, aus Kunststoff, einem Holzwerkstoff-Kunststoff-Gemisch oder einem Verbundwerkstoff, eine Zementfaserplatte, Gipsfaserplatte oder eine WPC-Platte (Wood Plastic Composites) oder eine SPC-Platte (Stone Plastic Composites) ist.

11. Verfahren nach Anspruch 10, **dadurch gekennzeichnet, dass** die Produktionslinie eine Fertigungslinie zur Herstellung einer mit einem Dekor versehenen Holzwerkstoffplatte ist, umfassend:
- mindestens eine Auftragsvorrichtung zum Auftragen einer ersten Harzpulverschicht, die Fasern enthalten kann, auf die Oberseite der Holzwerkstoffplatte und mindestens eine Vorrichtung zum Anschmelzen der ersten Harzpulverschicht, insbesondere ein IR-Strahler;
- opt. mindestens eine Auftragsvorrichtung zum Auftragen von mindestens einer Grundierungsschicht;
- opt. mindestens eine Auftragsvorrichtung zum Auftragen von mindestens einer Primerschicht;
- mindestens eine Druckvorrichtung,
- opt. mindestens eine Auftragsvorrichtung zum Auftragen einer weiteren Harzpulverschicht und mindestens eine Vorrichtung zum Anschmelzen der Harzpulverschicht, insbesondere ein IR-Strahler;,
- opt. mindestens eine Vorrichtung zum Aufstreuen einer vorbestimmten Menge an abriebfesten Partikeln;
- mindestens eine Auftragsvorrichtung zum Auftragen einer weiteren Harzpulverschicht und mindestens eine Vorrichtung zum Anschmelzen der Harzpulverschicht, insbesondere ein IR-Strahler;
- opt. mindestens eine Vorrichtung zum Aufstreuen einer vorbestimmten Menge an Glaskugeln;
- opt mindestens eine Auftragsvorrichtung zum Auftragen einer weiteren Harzpulverschicht und mindestens eine Vorrichtung zum Anschmelzen der ersten Harzpulverschicht, insbesondere ein IR-Strahler; und
- opt. mindestens eine in Verarbeitungsrichtung hinter der letzten Trocknungsvorrichtung angeordnete Kurztaktpresse;
- wobei nach der Auftragsvorrichtung zum Auftragen einer ersten Harzpulverschicht und/oder nach den Auftragsvorrichtungen zum Auftragen jeweils einer weiteren Harzpulverschicht mindestens ein NIR-Messkopf, bevorzugt mindestens ein NIR-Multimesskopf, zur Aufnahme von mindestens einem NIR-Spektrum der mit dem pulverförmigen Harz beschichteten Holzwerkstoffplatte vorgesehen ist.

12. Verfahren nach einem der vorhergehenden Ansprüche, **dadurch gekennzeichnet, dass** die Bestimmung der auf das Trägermaterial aufgebrachten Menge an pulverförmigen Harz oder Harzmischung kontinuierlich und online in der Produktionslinie erfolgt.

13. Verfahren nach einem der vorhergehenden Ansprüche, **dadurch gekennzeichnet, dass** der mindestens eine NIR-Messkopf sich quer zur Laufrichtung des mit dem pulverförmigen Harz versehenen Trägermaterials in der Fertigungslinie bewegt und über die gesamte Breite des Trägermaterials traversiert, um bestimmte Problembereiche, insbesondere Minderaufträge im Rand- oder Mittelbereich des Trägermaterials zu analysieren.

14. Verfahren nach einem der vorhergehenden Ansprüche, dass der mindestens eine NIR-Messkopf sich in Laufrichtung des mit dem pulverförmigen Harz versehenen Trägermaterials in der Fertigungslinie bewegt.

## Claims

1. A method of controlling a production line for the manufacture of a coated carrier material, wherein at least one layer of at least one powdered resin or resin mixture is applied to the at least one carrier material,
wherein the production line comprises at least
- at least one NIR multi-measuring head for recording at least one NIR spectrum of the carrier material coated with the powdered resin or resin mixture using the at least one NIR measuring head in a wavelength range between 1400 nm and 1600 nm, preferably between 1450 nm and 1550 nm;
- at least one control system for controlling the production line, wherein the control system of the production line comprises at least one computer-aided evaluation unit and a database,
- wherein the evaluation unit is configured to compare the NIR spectrum recorded for the carrier material coated with the powdered resin or resin mixture with a created calibration model to determine the quantitative amount of the powdered resin or resin mixture applied to the carrier material,
- wherein the database is configured to store the thus determined parameter data on the amount of powdered resin applied,
- wherein the control system is configured to use the determined parameters to control the production line,
wherein the calibration model is determined based on reference samples as follows:
- applying at least one powdered resin or a powdered mixture of at least two resins in a defined mixing ratio in respectively different quantitatively defined amounts to respectively one carrier material as reference samples;
- recording at least one NIR spectrum of each of the reference samples using at least one NIR measuring head in a wavelength range between 1400 nm and 1600 nm, preferably between 1450 nm and 1550 nm;
- correlating the different quantitative amounts of powdered resin or resin mixture of the reference samples to the recorded NIR spectra of said reference samples; and
- creating the calibration model for the relationship between the spectral data of the NIR spectra and the corresponding quantitative amounts of powdered resin or resin mixture of the reference samples by means of multivariate data analysis.

2. Method according to claim 1, **characterized in that** the NIR multi-measuring head is configured to supply the measured parameters (actual values) to the evaluation unit, which controls the production process accordingly if the measured parameters (actual values) deviate from the corresponding target values of these parameters.

3. Method according to one of the preceding claims, **characterized in that** the powdered resin is a formaldehyde resin, preferably a urea resin, a melamine resin or a phenolic resin, in particular preferably a melamine-formaldehyde resin or a urea resin.

4. Method according to one of the preceding claims, **characterized in that** at least one mixture of a first powdered resin and a second powdered resin is applied to the at least one carrier material.

5. Method according to claim 4, **characterized in that** the at least one mixture comprises a first powdered resin and a second powdered resin in a ratio between 10% by weight: 90% by weight and 90% by weight : 10% by weight, preferably between 25% by weight : 75% by weight and 75% by weight : 25% by weight, more preferably between 55% by weight : 45% by weight and 45% by weight : 55% by weight, e.g. 50 : 50% by weight.

6. Method according to one of the preceding claims, **characterized in that** the powdered resin or the mixture of at least two powdered resins is applied in an amount of between 10 and 150 g/m², preferably between 20 and 100 g/m², more preferably between 40 and 80 g/m².

7. Method according to one of the preceding claims, **characterized in that** the at least one carrier material comprises at least one paper layer, in particular at least one base paper or at least one pretreated, impregnated paper.

8. Method according to claim 7, **characterized in that** the production line is a production line for impregnating paper layers, comprising at least one application device for applying at least one resin powder layer, in particular by means of tribo-guns, at least one device for melting the resin powder layer, preferably using an IR emitter, and at least one device for drying and curing the coated paper layer.

9. Method according to one of claims 7-8, **characterized in that** at least one NIR measuring head is provided after the application device for applying a resin powder layer for recording at least one NIR spectrum of the paper layer coated with the powdered resin.

10. Method according to one of the preceding claims, **characterized in that** the at least one carrier material is a board made of a wood-based material, in particular a chipboard, medium-density fibreboard (MDF), high-density fibreboard (HDF), oriented strand board (OSB) or plywood board, made of plastic, a wood-based material/plastic mixture or a composite material, a cement fibreboard, gypsum fibreboard or a wood plastic composites (WPC) board or a stone plastic composites (SPC) board.

11. Method according to claim 10, **characterized in that** the production line is a production line for manufacturing a wood-based panel provided with a decor, comprising
- at least one application device for applying a first resin powder layer, which may contain fibers, to the top surface of the wood-based panel and at least one device for melting the first resin powder layer, in particular an IR emitter;
- opt. at least one application device for applying at least one primer layer;
- opt. at least one application device for applying at least one primer layer;
- at least one printing device,
- opt. at least one application device for applying a further resin powder layer and at least one device for melting the resin powder layer, in particular an IR emitter;
- opt. at least one device for scattering a predetermined quantity of abrasion-resistant particles;
- at least one application device for applying a further resin powder layer and at least one device for melting the resin powder layer, in particular an IR emitter;
- opt. at least one device for scattering a predetermined quantity of glass beads;
- opt. at least one application device for applying a further resin powder layer and at least one device for melting the first resin powder layer, in particular an IR emitter; and
- opt. at least one short-cycle press arranged downstream of the last drying device in the processing direction;
- wherein at least one NIR measuring head, preferably at least one NIR multi-measuring head, is provided after the application device for applying a first resin powder layer and/or after the application devices for applying in each case a further resin powder layer, for recording at least one NIR spectrum of the wood-based panel coated with the powdered resin.

12. Method according to one of the preceding claims, **characterized in that** the determination of the amount of powdered resin or resin mixture applied to the carrier material is carried out continuously and online in the production line.

13. Method according to one of the preceding claims, **characterized in that** the at least one NIR measuring head moves transversely to the running direction of the carrier material provided with the powdered resin in the production line and traverses over the entire width of the carrier material in order to analyze certain problem areas, in particular shortfall orders in the edge or middle area of the carrier material.

14. Method according to one of the preceding claims, in that the at least one NIR measuring head moves in the running direction of the carrier material provided with the powdered resin in the production line.

## Revendications

1. Procédé de commande d'une ligne de production pour la fabrication d'un matériau de support revêtu, dans lequel au moins une couche composée d'au moins une résine ou d'un mélange de résine pulvérulent(e) est appliquée sur l'au moins un matériau de support, dans lequel la ligne de production comprend au moins
- au moins une tête de mesure multiple NIR pour l'enregistrement d'au moins un spectre NIR du matériau de support revêtu de la résine ou du mélange de résine pulvérulent(e) à l'aide de l'au moins une tête de mesure NIR dans une plage de longueur d'onde comprise entre 1400 nm et 1600 nm, de préférence entre 1450 nm et 1550 nm ; et
- au moins un système de commande pour la commande de la ligne de production, dans lequel le système de commande de la ligne de production comprend au moins une unité d'évaluation assistée par ordinateur et une base de données,
- dans lequel l'unité d'évaluation est configurée pour comparer le spectre NIR enregistré pour le matériau de support revêtu de la résine ou du mélange de résine pulvérulent(e) à un modèle d'étalonnage créé, afin de déterminer la quantité quantitative de résine ou de mélange de résine pulvérulent(e) appliquée sur le matériau de support,
- dans lequel la base de données est configurée pour stocker les données de paramètres ainsi déterminées sur la quantité d'application de résine pulvérulente,
- dans lequel le système de commande est configuré pour utiliser les paramètres déterminés pour la commande de la ligne de production, dans lequel le modèle d'étalonnage est déterminé à partir d'échantillons de référence comme suit :
- l'application d'au moins une résine pulvérulente ou d'un mélange pulvérulent d'au moins deux résines dans un rapport de mélange défini en respectivement différentes quantités quantitativement définies sur respectivement un matériau de support comme échantillons de référence ;
- l'enregistrement d'au moins un spectre NIR de chacun des échantillons de référence à l'aide d'au moins une tête de mesure NIR dans une plage de longueur d'onde comprise entre 1400 nm et 1600 nm, de préférence entre 1450 nm et 1550 nm ;
- l'affectation des différentes quantités quantitatives de résine ou mélange de résine pulvérulent(e) des échantillons de référence aux spectres NIR enregistrés desdits échantillons de référence ; et
- la création du modèle d'étalonnage pour la corrélation entre les données spectrales des spectres NIR et les quantités quantitatives associées de résine ou mélange de résine pulvérulent(e) des échantillons de référence à l'aide d'une analyse de données multivariée.

2. Procédé selon la revendication 1, **caractérisé en ce que** la tête de mesure multiple NIR est configurée pour fournir les paramètres mesurés (valeurs réelles) à l'unité d'évaluation, qui commande de manière correspondante le déroulement de la production en cas d'écart entre les paramètres mesurés (valeurs réelles) et les valeurs de consigne correspondantes de ces paramètres.

3. Procédé selon l'une quelconque des revendications précédentes, **caractérisé en ce que** la résine pulvérulente est une résine de formaldéhyde, de préférence une résine d'urée, une résine de mélamine ou une résine phénolique, de manière particulièrement préférée une résine de mélamine-formaldéhyde ou une résine d'urée.

4. Procédé selon l'une quelconque des revendications précédentes, **caractérisé en ce qu'**au moins un mélange d'une première résine pulvérulente et d'une seconde résine pulvérulente est appliqué sur l'au moins un matériau de support.

5. Procédé selon la revendication 4, **caractérisé en ce que** l'au moins un mélange contient une première résine pulvérulente et une seconde résine pulvérulente dans un rapport compris entre 10 % en poids : 90 % en poids et 90 % en poids : 10 % en poids, de préférence entre 25 % en poids : 75 % en poids et 75 % en poids : 25 % en poids, de manière particulièrement préférée entre 55 % en poids : 45 % en poids et 45 % en poids : 55 % en poids, par ex. 50 : 50 % en poids.

6. Procédé selon l'une quelconque des revendications précédentes, **caractérisé en ce que** la résine pulvérulente ou le mélange d'au moins deux résines pulvérulentes est appliqué(e) en une quantité comprise entre 10 et 150 g/m², de préférence, entre 20 et 100 g/m², de manière particulièrement préférée entre 40 et 80 g/m².

7. Procédé selon l'une quelconque des revendications précédentes, **caractérisé en ce que** l'au moins un matériau de support comprend une couche de papier, en particulier au moins un papier brut ou au moins un papier imprégné prétraité.

8. Procédé selon la revendication 7, **caractérisé en ce que** la ligne de production est une ligne de fabrication pour l'imprégnation de couches de papier, comprenant au moins un dispositif d'application pour l'application d'au moins une couche de poudre de résine, en particulier au moyen de pistolets tribo, au moins un dispositif pour la fusion de la couche de poudre de résine, de préférence à l'aide d'un émetteur IR, et au moins un dispositif pour le séchage et le durcissement de la couche de papier revêtue.

9. Procédé selon l'une quelconque des revendications 7-8, **caractérisé en ce qu'**au moins une tête de mesure NIR est prévue après le dispositif d'application pour l'application d'une couche de poudre de résine pour l'enregistrement d'au moins un spectre NIR de la couche de papier revêtue de la résine pulvérulente.

10. Procédé selon l'une quelconque des revendications précédentes, **caractérisé en ce que** l'au moins un matériau de support est un panneau composé d'un matériau dérivé du bois, en particulier un panneau de particules, de fibres moyenne densité (MDF), de fibres haute densité (HDF), de lamelles orientées (OSB) ou de contreplaqué, de plastique, d'un mélange matériau dérivé du bois-plastique ou d'un matériau composite, un panneau fibres-ciment, un panneau fibres-gypse ou un panneau WPC (composite bois-plastique) ou un panneau SPC (composite pierre-plastique).

11. Procédé selon la revendication 10, **caractérisé en ce que** la ligne de production est une ligne de fabrication pour la fabrication d'un panneau en matériau dérivé du bois pourvu d'un décor, comprenant :
- au moins un dispositif d'application pour l'application d'une première couche de poudre de résine, qui peut contenir des fibres, sur la face supérieure du panneau en matériau dérivé du bois et au moins un dispositif pour la fusion de la première couche de poudre de résine, en particulier un projecteur IR ;
- facultativement au moins un dispositif d'application pour l'application d'au moins une couche d'apprêt ;
- facultativement au moins un dispositif d'application pour l'application d'au moins une couche primaire ;
- au moins un dispositif de pression,
- facultativement au moins un dispositif d'application pour appliquer une couche de poudre de résine supplémentaire et au moins un dispositif pour faire fondre la couche de poudre de résine, en particulier un émetteur IR :
- facultativement au moins un dispositif pour disperser une quantité prédéfinie de particules résistantes à l'abrasion ;
- au moins un dispositif d'application pour appliquer une couche de poudre de résine supplémentaire et au moins un dispositif pour faire fondre la couche de poudre de résine, en particulier un émetteur IR ;
- facultativement au moins un dispositif pour disperser une quantité prédéfinie de billes de verre ;
- facultativement au moins un dispositif d'application pour appliquer une couche de poudre de résine supplémentaire et au moins un dispositif pour faire fondre la première couche de poudre de résine, en particulier un projecteur IR ; et
- facultativement au moins une presse à cycle court disposée dans le sens de traitement derrière le dernier dispositif de séchage ;
- dans lequel après le dispositif d'application pour appliquer une première couche de poudre de résine et/ou après les dispositifs d'application pour appliquer respectivement une couche de poudre de résine supplémentaire est prévue au moins une tête de mesure NIR, de préférence au moins une tête de mesure multiple NIR, pour l'enregistrement d'au moins un spectre NIR du panneau en matériau dérivé du bois revêtu de la résine pulvérulente.

12. Procédé selon l'une quelconque des revendications précédentes, **caractérisé en ce que** la détermination de la quantité de résine ou de mélange de résine pulvérulent(e) appliquée sur le matériau support s'effectue en continu et en ligne sur la ligne de production.

13. Procédé selon l'une quelconque des revendications précédentes, **caractérisé en ce que** l'au moins une tête de mesure NIR se déplace transversalement par rapport au sens de marche du matériau de support pourvu de la résine pulvérulente dans la ligne de fabrication et traverse toute la largeur du matériau de support pour analyser certaines zones problématiques, en particulier les dépôts réduits dans la zone marginale ou centrale du matériau de support.

14. Procédé selon l'une quelconque des revendications précédentes, dans lequel l'au moins une tête de mesure NIR se déplace dans le sens de marche du matériau de support pourvu de la résine pulvérulente dans la ligne de fabrication.
